# EUROPEAN PATENT SPECIFICATION

(11) **EP 3 658 890 B1**
(45) Date of publication and mention of the grant of the patent: **29.03.2023**
(21) Application number: 18749158.4
(22) Date of filing: 23.07.2018
(51) Int. Cl.: G01N 15/06, G01N 15/02, F24F 11/58, F24F 110/64

(54) **SYSTEM FOR MONITORING THE QUALITY OF THE AIR IN AIR DUCTS**
SYSTEM ZUR ÜBERWACHUNG DER LUFTQUALITÄT IN LUFTKANÄLEN
SYSTÈME DE CONTRÔLE DE LA QUALITÉ DE L'AIR DANS DES CONDUITES D'AIR

(30) Priority: 26.07.2017 IT 201700085340
(43) Date of publication of application: 03.06.2020
(73) Proprietor: GWA Gima Water&Air S.r.l., 03012 Anagni (FR) (IT)
(72) Inventor: DI COSIMO, Pierpaolo, 03100 Frosinone (IT); DI COSIMO, Cristiano, 03100 Frosinone (IT)
(74) Representative: Bellomia, Paolo
(86) International application number: PCT/IB2018/055465
(87) International publication number: WO 2019/021155

(56) References cited:
- EP-A2- 2 703 049
- JP-A- H10 170 438
- JP-A- 2002 333 396
- US-A1- 2011 122 423
- US-A1- 2013 038 895
- US-A1- 2016 063 833

## Description

### TECHNICAL FIELD

The present invention generally relates to the field of air quality monitoring.

More specifically, the invention concerns a system for monitoring the quality of the air in air ducts for heating, ventilation and air conditioning systems.

### BACKGROUND ART

The quality of the air inside closed rooms (such as, for example, public or private offices, hotels and restaurants) can worsen due to the presence of dust and pollutant agents inside the air ducts, thereby favouring the proliferation of fungi and bacteria in the room: this can cause both a general malaise or concentration difficulties to persons who spend a long time inside the closed rooms and also more serious harm to the health such as, for example, asthma, allergies, bronchitis.

It is therefore important to maintain a good quality of the air inside the closed rooms.

Moreover, the presence of contaminating substances deposited on the inside surfaces of the air ducts results in an increase in the electricity consumption of the HVAC (Heating, Ventilation and Air Conditioning) systems in order to maintain the desired climatic conditions.

Currently, the hygienic condition of the air ducts of HVAC systems is controlled by physical inspection of the air ducts by skilled personnel and the sampling of the particulate deposited on the inner surfaces of the air duct; the operations for physical inspection of the air ducts is typically carried out periodically with a sufficiently small time interval in order to avoid dangerous situations.

This physical inspection activity has the following drawbacks:
- it is invasive as it requires the opening of the suspending ceilings by skilled personnel, in order to access the air ducts;
- it is performed in a discontinuous manner and thus it does not allow a continuous monitoring of the level of air pollution;
- if it is performed periodically with values of the time interval which are too small, it is often unnecessary since the quality of the air is still optimum;
- it is expensive.

It is also possible to use inspection video systems which acquire images of the inside of the air ducts of the HVAC systems: this solution partly resolves only the first drawback because it is less invasive, but it has still the drawbacks of performing discontinuous monitoring, which is often unnecessary and expensive.

JP 2002 333396 discloses a device 100 (see Fig.1) for detecting dust in ducts in which a fluid flows.

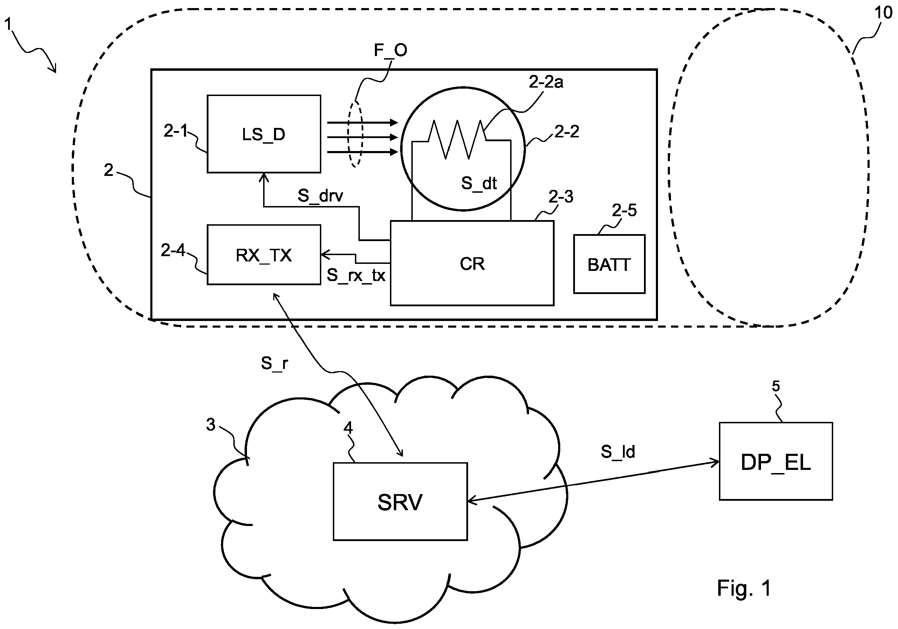

The device 100 comprises a detection unit 1 in the shape of a pipe (see Fig.1 and 3) which is inserted inside the duct, wherein the pipe 1 comprises a plurality of openings 4 through which the fluid can enter and leave (see again Fig.3).

The device 100 also comprises a sensor 19 (see Fig.5) which measures the concentration of dust in the duct by measuring the variation of the luminous intensity of the volume of the fluid which passes through the sensor 19 (see par. 28).

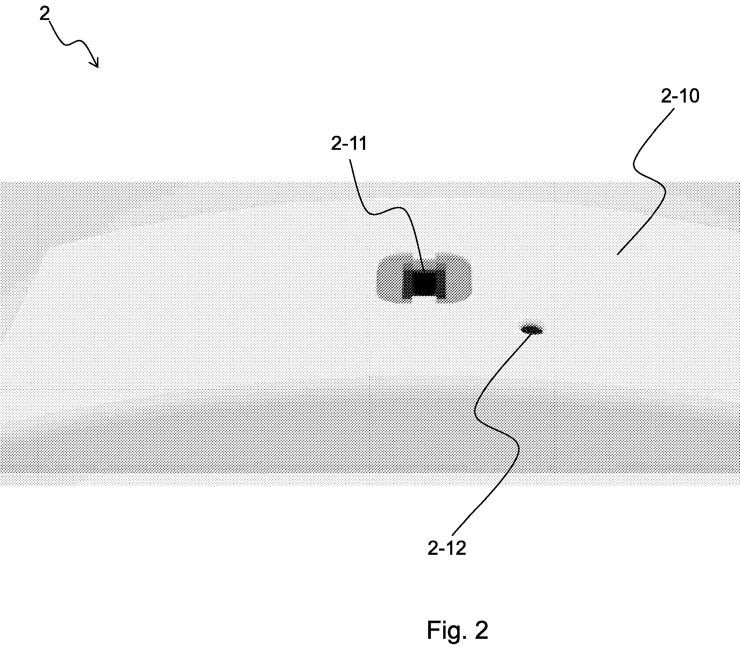

Therefore the fluid which flows in the duct comes into an opening 4 of the pipe 1, passes through the dust concentration sensor 19 inside the device 100, comes into contact with the sensor 24 and comes out from another opening 4 (see Fig. 2 which shows that the fluid enters into an opening labelled 'X' and comes out from another opening indicated with a dot; see also Fig.5 which shows the path of the fluid through the sensor 19).

The sensor 19 performs the measure of the concentration of dust in the fluid per unit of volume, by monitoring the variation of the luminous intensity of the passing fluid.

Patent application JPH10 170438 discloses an optoelectronic device for detecting the quality of the air in air ducts comprising a laser diode configured to generate an optical beam passing through at least a portion of the air inside an air duct, a light sensor configured to detect the light intensity of at least part of the optical beam which has passed through the portion of the air and to generate, as a function of the detected light intensity, an electrical signal representative of the quantity of particulate present in the portion of the air inside the duct, an electronic circuit electrically connected with the light sensor, the electronic circuit being configured to receive the electrical signal representative of the quantity of particulate and to generate therefrom a signal carrying data representative of the measurement of the quantity of particulate present in the portion of the air inside the air duct, and the light sensor comprises a photosensitive surface on which the particulate present in the portion of the air deposits,wherein said electrical signal is representative of the quantity of particulate deposited on the light sensor; wherein the laser diode is configured to generate an optical beam impinging at least partially on the photosensitive surface of the light sensor, and wherein the electronic circuit comprises a processing unit configured to receive the electrical signal representative of the quantity of particulate deposited on the photosensitive surface and calculate, as a function of the generated electrical signal, a measure of the quantity of particulate deposited per unit of area on the photosensitive surface of the light sensor.

### SUMMARY OF THE INVENTION

The present invention relates to an optoelectronic device for monitoring the quality of the air in air ducts as defined in the enclosed claim 1 and by its preferred embodiments described in the dependent claims from 2 to 6.

The Applicant has perceived that the optoelectronic device according to the present invention has the following advantages:
- it does not require an invasive inspection of the air ducts;
- it allows a continuous monitoring of the level of air pollution;
- it allows to monitor the quantity of particulate deposited per unit of surface area;
- it has as an immediate effect a constant assessment of the qualitative conditions of the air inside the ducts so as to be able to immediately decide the need for any intervention with significant benefit for the health and comfort of the persons occupying the spaces served by the relative duct and such to reduce the electricity consumption necessary for powering heating, ventilation and air conditioning systems;
- it allows the passage from a monitoring of the air in the ducts of the "statistical" type (that is to say, with physical inspections performed periodically) to an actual monitoring, allowing an increase of the time between operations for intervention with physical inspections since the conditions of the ducts are still optimum;
- it is cheap.

### BRIEF DESCRIPTION OF THE DRAWINGS

Further characteristic features and advantages of the invention are given in the following description of a preferred embodiment and of its variants provided by way of example with reference to the accompanying drawings, in which:
- Figure 1 shows a block diagram of a system for monitoring the quality of the air in air ducts according to an embodiment of the invention;
- Figure 2 shows a perspective view of an optoelectronic device according to the invention and used in the monitoring system of Figure 1.

### DETAILED DESCRIPTION OF THE INVENTION

It should be noted that in the following description blocks, components or modules which are identical or similar are indicated in the drawings with the same reference numerals, even if they are shown in different embodiments of the invention.

Figure 1 shows a system 1 for monitoring the quality of the air in air ducts 10 according to an embodiment of the present invention.

The air monitoring system 1 comprises:
- an optoelectronic device 2 according to the present invention;
- a network element 4;
- an electronic device 5;
- a telecommunication network 3.

The term air duct 10 means a structure which delimits a substantially closed space (typically tubular in shape) for conveying a flow of air, wherein the duct 10 has an inlet for introducing the air and an outlet for generating the air.

The optoelectronic device 2 has the function of measuring the quality of the air in an air duct 10 of an air treatment system (for example, an HVAC system) of a closed room, by measuring the quantity of particulate present on the inner surfaces of the air duct 10.

The optoelectronic device 2 is positioned inside a portion of the air duct 10, for example it is fixed on the inner surface of the air duct 10.

The use of the optoelectronic device 2 allows the passage from a "statistical" monitoring to an actual monitoring.

In fact, according to the prior art, persons who want to keep under control the quality of the air can merely schedule a physical inspection of the air vent duct each "n period", but this inspection is often also unnecessary since the quality of the air is still optimum.

On the other hand, the invention allows an actual monitoring of the quality of the air, which allows an extension of the intervention operations since the quality of the air in the ducts - even though still within the statistically significant period of danger - is still optimum.

Preferably, a plurality of optoelectronic devices implemented like the optoelectronic device 2 are positioned inside the air duct 10 in different portions; in other words, a plurality of optoelectronic devices 2 are positioned in different positions along the path in which the air flows in the duct 10, in order to monitor the quality of the air in a plurality of different positions of the duct 10.

More specifically, the optoelectronic device 2 is has the function of measuring the presence of particulate on the inner surfaces of the air duct 10.

The term "particulate" means the set of solid or liquid particles suspended in the air, with a diameter of between a few nanometres and 500 micrometres.

The main source of the particulate in the air duct 10 consists of the dust suspended in the air and/or deposited on the inner surfaces of the air duct 10, expecially on the lower surface of the air duct 10.

The telecommunication network 3 is has the function of connecting one or more optoelectronic devices 2 to the network element 4.

It should be noted that the optoelectronic device 2 may be connected directly to the telecommunication network 4 by means of a medium-long distance wireless signal (for example, radio mobile of 2G/ 3G/ 4G type), or the optoelectronic device 2 may be connected to the telecommunication network 4 by means of a router with which the optoelectronic device 2 is connected by means of a short distance wireless signal (for example, Wifi type).

The network element 4 is part of the telecommunication network 3 and it has the function of receiving, processing and storing data representative of the measurement of the quantity of particulate present in the air inside the air duct 10.

Moreover, the network element 4 is configured to transmit towards the electronic device 5 a medium-long distance signal S_ld carrying the processed data of the measurement of the quantity of particulate present in the air inside the air duct 10.

The network element 4 is for example a computer server.

The electronic device 5 is has the function of receiving from the network element 4 the processed data of the measurement of the quantity of particulate present in the air inside the air duct 10 and, moreover, it has the function of displaying the data on a graphical user interface, for example in the form of graphs and/or tables: when the electronic device 5 detects that the quantity of particulate present in the air inside the air duct 10 (or the quantity of particulate deposited on the sensor inside the optoelectronic device 2) is greater than a threshold value, an alarm signal is generated indicating a request to carry out a cleaning inside the air duct 10, so that the specialist personnel are assigned to the cleaning of the air duct 10 in the portion in which the optoelectronic device 2 has been positioned.

The electronic device 5 may be a personal computer of the fixed or mobile type, a smartphone or a tablet.

The electronic device 5 comprises a user interface (for example, a LED or LCD type screen) configured to display the levels of hygiene of the air treatment plant in the positions in which the optoelectronic devices 2 are installed.

With reference in particular to the optoelectronic device 2, this comprises:
- an optical source 2-1 in the form of a laser diode;
- an optoelectronic sensor 2-2 in the form of a photosensitive resistor;
- an electronic circuit 2-3;
- a transceiver 2-4 for wireless signals;
- a battery 2-5 to power the components of the optoelectronic device 2.

The optical source 2-1 has the function of generating, as a function of a control electrical signal S_drv, an optical beam which passing through at least a portion of the air inside the air duct 10.

The optical source 2-1 is a laser diode.

The optoelectronic sensor 2-2 (or photodetector) has the function of measuring the light intensity of at least part of the optical beam received from the optical source 2-1 and which has passed through the portion of the air and, moreover, the optoelectronic sensor 2-2 has the function of generating as output an electrical signal S_dt proportional to the measured light intensity of the optical beam received: li this way, the electrical signal S_dt represents the measurement of the quantity of particulate present in the air inside the air duct 10 and thus it is possible to monitor the quality of the air itself.

More specifically:
- when the quantity of particulate present in the air between the optical source 2-1 and the optoelectronic sensor 2-2 is low, the value of the light intensity measured by the optoelectronic sensor 2-2 is high, so the electrical signal S_dt (for example, a current) generated by the optoelectronic sensor 2-2 has a high value;
- when, on the other hand, the quantity of particulate present in the air between the optical source 2-1 and the optoelectronic sensor 2-2 is high, the value of the light intensity measured by the optoelectronic sensor 2-2 is small, so the electrical signal S_dt generated by the optoelectronic sensor 2-2 has a small value.

For this reason, the electrical signal S_dt represents the quantity of particulate (measured for example in milligrams) present in the air inside the air duct 10 and is an analog signal having an increasing trend with the increase of the light intensity value measured by the optoelectronic sensor 2-2.

According to the invention, the optoelectronic sensor 2-2 and the optical source 2-1 detect the variation of the reflection of the optical beam generated by the different quantity of particulate deposited on the photosensitive surface of the optoelectronic sensor 2-2: the variation of the reflection is converted into unit of surface area (in particular g/m²).

More specifically, according to the invention the optoelectronic device 2 comprises a drain 2-11 (Figure 2) inside which at least part of the particulate present in the air inside the air duct 10 deposits (i.e. accumulates), by means of the force of gravity, in a given period of time.

More specifically, the optoelectronic device 2 is enclosed by a casing 2-10 (for example of plastic material) which comprises an opening, which constitutes a first end of the drain 2-11 which extends in a direction mainly vertical inside the casing 2-10: on the bottom of the drain 2-11 (second end of the drain 2-11) at least part of the particulate present in the air inside the air duct 10 deposits (i.e. accumulates) in the period of time considered.

According to the invention, the optoelectronic sensor 2-2 is positioned on the bottom of the drain 2-11, in particular at the second end of the drain 2-11 inside the casing 2-10.

Therefore the optoelectronic sensor 2-2 comprises a photosensitive surface (for example of the known dimensions); the optical source 2-1 is positioned inside the casing 2-10 in the proximity of the optoelectronic sensor 2-2 and is such to generate the optical beam impinging on the photosensitive surface of the optoelectronic sensor 2-2.

Therefore the particulate deposits on the photosensitive surface of the optoelectronic sensor 2-2 and thus the deposited particulate obstructs the same surface, that is it reduces its capability of detecting the light beam emitted by the optical source 2-1: this variation of the measuring of the optical beam emitted is converted into the electrical signal S_dt, which thus represents the quantity of particulate per unit of surface area (measured in g/m²) which is deposited in the considered time period on the photosensitive surface of the optoelectronic sensor 2-2.

Afterwards the transceiver 2-4 transmits towards the network element 4 the short-distance wireless signal carrying the calculated quantity of particulate per unit of area deposited in the considered time period on the photosensitive surface of the optoelectronic sensor 2-2.

Therefore by means of the opening in the casing, of the optoelectronic sensor 2-2 positioned in the proximity of the opening and of the optical source 2-1 positioned in the proximity of the optoelectronic sensor 2-2, the quantity of particulate which is deposited over time per unit of surface area on the photosensitive surface of the optoelectronic sensor 2-2 is measured; on the other hand, JP 2002 333396 measures the concentration of dust per unit of volume by means of the variation of the luminous intensity of the passing fluid.

The optoelectronic sensor 2-2 is a photosensitive resistor 2-2a, that is it has a resistance value which decreases with the increase in the intensity of the optical beam incident on the resistor 2-2a.

The use of the photosensitive resistor 2-2a is particularly advantageous because it allows a surface to be simply formed above which the particulate present in the air inside the air duct 10 is deposited, by the passing through of the opening of the casing of the optoelectronic device 2-2, as illustrated above with regard to the invention.

For this reason, according to the variant of the invention, the photosensitive resistor 2-2a is positioned inside the casing 2-10 of the optoelectronic device 2 and close to the opening of the casing (in particular, on the bottom of the drain 2-11), so the particulate present in the air inside the air duct 10 passes through the opening of the casing and deposits on the surface of the photosensitive resistor 2-2a, reducing its capability to detect the light beam emitted by the optical source 2-1 (for example, a laser diode which emits a laser beam): in this way, the value of the resistance of the photosensitive resistor 2-2a varies and this variation of the value of the resistance is converted into the analog type electrical signal S_dt, which thus represents the quantity of particulate per unit of surface area which is deposited over time on the photosensitive surface of the optoelectronic sensor 2-2.

For example, the value of the resistance of the photosensitive resistor 2-2a increases with the increase of the quantity of particulate per unit of surface area which is deposited over time on the sensitive surface of the photosensitive resistor 2-2a, that is, the resistance of the photosensitive resistor 2-2a is directly proportional to the quantity of particulate deposited on the sensitive surface of the photosensitive resistor 2-2a.

Preferably, the photosensitive resistor 2-2a has a known surface area (that is, defined in advance, for example 0.5 cm²), thus the electronic circuit 2-3 comprises an analog-digital converter of the electrical signal S_dt generated by the photosensitive resistor 2-2a and comprises a processing unit which receives as input the digital value of the electrical signal S_dt; the processing unit calculates, as a function of the digital value of the electrical signal S_dt, a percentage of dirtiness of the surface of the photosensitive resistor 2-2a, so the processing unit calculates a conversion of the dirtiness percentage into a quantity measured in grams/m² indicative of the quantity of particulate (per unit of surface area) deposited on the surface of the photosensitive resistor 2-2a.

The photosensitive resistor 2-2a may be, for example, the component NORPS-12 sold by Silonex Inc.

The electronic circuit 2-3 is electrically connected with the optical source 2-1, the optoelectronic sensor 2-2, the electronic circuit 2-3, the transceiver 2-4 and the battery 2-5.

The electronic circuit 2-3 is configured to receive and process the electrical signal S_dt generated by optoelectronic sensor 2-2.

Moreover, the electronic circuit 2-3 is configured to generate suitable values of the control signal S_drv of the optical source 2-1.

Lastly, the electronic circuit 2-3 is configured to exchange with the transceiver 2-4 an internal signal S_rx_tx carrying data representative of the measurement of the quantity of particulate present in the air inside the air duct 10.

Advantageously, the electronic circuit 2-3 comprises a processing unit (for example, a microprocessor) configured to receive from the optoelectronic sensor 2-2 a plurality of measurement values of the light intensity representative of the quantity of particulate present inside the air duct 10, at different time instants in a defined time period and it is configured to calculate a statistical indicator (for example, mode, median or mean) as a function of the plurality of values measured over time of the light intensity.

The plurality of values measured of the light intensity may be performed at predetermined time intervals, for example periodically over a defined time period (for example, each ms for 5 minutes).

The transceiver 2-4 is configured to receive from the electronic circuit 2-3 the internal signal S_rx_tx and it is configured to transmit towards the network element 4 a wireless signal S_r carrying data representative of the measurement of the quantity of particulate present in the air inside the air duct 10.

Preferably, the transceiver 2-4 is configured to exchange short-distance wireless signals, such as, for example, Wifi; in this case, the network element is a Wifi type access point.

Alternatively, the short-distance wireless signals transceiver 2-4 is of the Bluetooth type.

The network element 4 is configured to receive the wireless signal S_r and to process the data representative of the measurement of the quantity of particulate present in the air inside the air duct 10.

The battery 2-5 has the function of supplying the optical source 2-1, the optoelectronic sensor 2-2, the electronic circuit 2-3 and the wireless signal transceiver 2-4.

Preferably, the optoelectronic device 2 further comprises a camera having the function of acquiring images or videos representative of the space inside the air duct 10.

In this case, the electronic circuit 2-3 is further connected with the camera and it is configured to receive therefrom the acquired images/videos representative of the space inside the air duct 10 and to forward the acquired images/videos to the transceiver 2-4, which in turn receives the images/videos and transmits them towards the network element 4.

Preferably, the optoelectronic device 2 further comprises a sensor configured to measure the level of microbiological pollution of the air present inside the air duct 10.

In this case, the electronic circuit 2-3 is further connected to the sensor of the level of microbiological pollution and it is configured to receive therefrom data representative of the level of microbiological pollution measured inside the air duct 10 and to send the received data to the transceiver 2-4, which in turn receives the data of the level of microbiological pollution and transmits it towards the network element 4.

Preferably, the optoelectronic device 2 further comprises an electro-mechanical device having the function of injecting sanitising products and/or fragrances inside the air duct 10.

Advantageously, the electronic circuit 2-3 comprises a processing unit (for example, a microprocessor).

Preferably, the operation of the monitoring system 1 comprises an initial calibration phase and a subsequent normal operation phase.

The calibration phase is performed the first time that the optoelectronic device 2 is installed inside the air duct 10 or when the optoelectronic device 2 is repositioned in the duct 10 after its removal, for example to replace its power supply battery or for other types of maintenance of the optoelectronic device 2 (for example, cleaning of the surface of the optoelectronic sensor 2-2).

The calibration phase is activated for example by pressing a reset button 2-12 positioned on the casing 2-10.

The calibration phase has the function of performing a calibration of the optoelectronic sensor 2-2 as a function of the quantity of light detected by the optoelectronic sensor under conditions of absence of particulate deposited on the photosensitive surface of the optoelectronic sensor 2-2.

More specifically, the calibration phase comprises the following steps:
- positioning the optoelectronic device 2 inside the air duct 10;
- supplying the optoelectronic device 2;
- generating, by means of the optical source 2-1, an optical beam impinging at least partially on the photosensitive surface of the optoelectronic sensor 2-2;
- detecting, by means of the photosensitive surface of the optoelectronic sensor 2-2, at least part of the impinging optical beam and generating therefrom the electrical signal S_dt having a value referred to as "configuration value"';
- assigning the configuration value equal to the null value of the quantity of particulate deposited generated by the air inside the air duct 10.

It should be noted that the calibration phase may be performed when there is no particulate deposited on the photosensitive surface of the optoelectronic sensor 2-2, that is the first time that the optoelectronic device 2 is installed inside the air duct 10.

The calibration phase may also be performed when there is already a not negligible quantity of particulate deposited on the photosensitive surface of the optoelectronic sensor 2-2, that is when the optoelectronic device 2 has been installed and is operating for a defined time period (for example, 6 months) inside the air duct 10 and it is decided (by measurement of the quantity of particulate deposited detected by the monitoring system 1) to clean the air duct, thus the measurement of the quantity of particulate is again initialised but without actually cleaning the optoelectronic sensor 2-2 from the particulate deposited thereon.

The normal operating phase is the one illustrated above in which the quantity of particulate deposited per unit of area generated by the air in the duct 10 is calculated.

Advantageously, the aerodynamic shape (see Figure 2), in particular without sharp edges, of the casing 2-10 of the optoelectronic device 2 is such to prevent self-cleaning effect which can be generated by the flow of air at different speeds.

The optoelectronic device 2 performs readings at programmable time intervals ; the different impedance of the photosensitive resistor 2-2a (dependent on the greater or lesser dirtiness of the photosensitive resistor 2-2a) generates different pulses which are converted, by means of the algorithm executed on the processing unit mounted on the board inside the optoelectronic device 2, into different dirtiness levels of the air of the part of the air treatment plant in which the single optoelectronic sensor 2-2 is installed.

In this way, by means of the reset button 2-12, it is possible to force the optoelectronic sensor 2-2 informing it that the current status (whether it is clean or dirty) is the zero point of the reading.

The above-mentioned dirtiness levels constitute the basis of the scale of hygiene returned to the user interface of the electronic device 5 and of any alarm levels which are the result of the operating programming of the air treatment plant, wherein the operating programming has been agreed with the customer who has underwritten the maintenance service for the air treatment plant.

In addition to hygiene levels of the air treatment plant indicated above, the optoelectronic sensor 2-2 transmits to the user interface of the electronic device 5 also the self-diagnosis information of the electronic components of the electronic device 5, in particular the charging status of the battery 2-5 for powering the electronic components of the optoelectronic device 2.

## Claims

1. Optoelectronic device for detecting the quality of the air in air ducts, the device comprising:
• a laser diode (2-1);
• a photosensitive resistor (2-2a);
• an electronic circuit (2-3) electrically connected to the photosensitive resistor, the electronic circuit being configured to receive the electrical signal (S_dt) and generate therefrom a signal (S_rx_tx) carrying data representative of the measurement of the quantity of particulate;
• a wireless signal transceiver (2-4) electrically connected to the electronic circuit (2-3), the transceiver being configured to receive the signal (S_rx_tx) carrying data representative of the measurement of the quantity of particulate and to generate therefrom a wireless signal (S_r) carrying data representative of the measurement of the quantity of particulate present in the portion of the air inside the air duct;
the optoelectronic device further comprising a drain (2-11) adapted to receive a portion of the air inside the air duct (10),
wherein the photosensitive resistor (2-2a) is positioned on the bottom of the drain and comprises a photosensitive surface on which the particulate present in the portion of the air deposits by means of the force of gravity, the photosensitive resistor being configured to generate an electrical signal (S_dt) representative of the quantity of particulate deposited on the photosensitive surface;
wherein the laser diode is positioned in the proximity of the photosensitive resistor and it is configured to generate an optical beam (F_O) impinging at least partially on the photosensitive surface of the photosensitive resistor,
and wherein the electronic circuit comprises a processing unit configured to receive the electrical signal representative of the quantity of particulate deposited on the photosensitive surface and calculate, as a function of the generated electrical signal, a measure of the quantity of particulate deposited per unit of area on the photosensitive surface of the photosensitive resistor.

2. Optoelectronic device according to claim 1, wherein the surface of the photosensitive resistor (2-2a) has known dimensions.

3. Optoelectronic device according to claims 1 or 2, wherein the optoelectronic device is made with a casing (2-10) comprising an opening adapted to receive the portion of the air inside the air duct (10), said opening defining a first end of the drain which extends inside the casing,
and wherein the photosensitive resistor (2-2a) is positioned inside the casing at a second end of the drain.

4. System for monitoring the quality of the air in air ducts, the system comprising an optoelectronic device according to any of the previous claims, a network element (4) and an electronic device (5),
wherein the network element (4) is configured to receive the wireless signal (S_r) carrying data representative of the measurement of the quantity of particulate, process the received data and transmit a medium-long distance signal (S_ld) carrying the processed data of the measurement of the quantity of particulate present in the portion of the air inside the air duct,
and wherein the electronic device (5) is configured to receive the medium-long distance signal carrying the processed data of the measurement of the quantity of particulate.

5. System according to claim 4, further comprising a camera configured to acquire images and/or videos representative of at least part of the space inside the air duct, wherein the transceiver is further configured to transmit towards the network element said acquired images and/or videos.

6. System according to claim 5, further comprising a sensor configured to detect the level of microbiological pollution of the air present inside the air duct,
wherein the transceiver is further configured to transmit towards the network element the measured value of the level of microbiological pollution of the air.

## Patentansprüche

1. Optoelektronische Vorrichtung zum Detektieren der Qualität der Luft in Luftkanälen, wobei die Vorrichtung umfasst:
• eine Laserdiode (2-1);
• einen lichtempfindlichen Widerstand (2-2a);
• eine elektronische Schaltung (2-3), die elektrisch mit dem lichtempfindlichen Widerstand verbunden ist, wobei die elektronische Schaltung konfiguriert ist, um das elektrische Signal (S_dt) zu empfangen und daraus ein Signal (S_rx_tx) zu erzeugen, das Daten trägt, die für die Messung der Menge an Partikelmasse repräsentativ sind;
• einen drahtlosen Signaltransceiver (2-4), der elektrisch mit der elektronischen Schaltung (2-3) verbunden ist, wobei der Transceiver konfiguriert ist, um das Signal (S_rx_tx) zu empfangen, das Daten trägt, die für die Messung der Menge an Partikelmasse repräsentativ sind, und daraus ein drahtloses Signal (S_r) zu erzeugen, das Daten trägt, die für die Messung der Menge an Partikelmasse repräsentativ sind, die in dem Abschnitt der Luft innerhalb des Luftkanals vorhanden ist;
wobei die optoelektronische Vorrichtung ferner einen Abfluss (2-11) umfasst, der angepasst ist, um einen Abschnitt der Luft innerhalb des Luftkanals (10) zu empfangen,
wobei der lichtempfindliche Widerstand (2-2a) am Boden des Abflusses angeordnet ist und eine lichtempfindliche Oberfläche umfasst, auf der sich die Partikelmasse, die in dem Abschnitt der Luft vorhanden ist, mittels der Schwerkraft ablagert, wobei der lichtempfindliche Widerstand konfiguriert ist, um ein elektrisches Signal (S_dt) zu erzeugen, das die Menge an Partikelmasse, die auf der lichtempfindlichen Oberfläche abgeschieden wird, darstellt;
wobei die Laserdiode in der Nähe des lichtempfindlichen Widerstands angeordnet ist und dazu konfiguriert ist, einen optischen Strahl (F_O) zu erzeugen, der zumindest teilweise auf die lichtempfindliche Oberfläche des lichtempfindlichen Widerstands auftrifft,
und wobei die elektronische Schaltung eine Verarbeitungseinheit umfasst, die dazu konfiguriert ist, das elektrische Signal zu empfangen, das für die Menge an auf der lichtempfindlichen Oberfläche abgeschiedenen Partikelmasse repräsentativ ist, und als eine Funktion des erzeugten elektrischen Signals eine Messung der Menge an pro Flächeneinheit auf der lichtempfindlichen Oberfläche des lichtempfindlichen Widerstands abgeschiedenen Partikelmasse zu berechnen.

2. Optoelektronische Vorrichtung nach Anspruch 1, wobei die Oberfläche des lichtempfindlichen Widerstands (2-2a) bekannte Abmessungen aufweist.

3. Optoelektronische Vorrichtung nach Anspruch 1 oder 2, wobei die optoelektronische Vorrichtung mit einem Gehäuse (2-10) gefertigt ist, das eine Öffnung umfasst, die angepasst ist, um den Abschnitt der Luft innerhalb des Luftkanals (10) zu empfangen, wobei die Öffnung ein erstes Ende des Abflusses definiert, das sich innerhalb des Gehäuses erstreckt,
und wobei der lichtempfindliche Widerstand (2-2a) innerhalb des Gehäuses an einem zweiten Ende des Abflusses positioniert ist.

4. System zur Überwachung der Qualität der Luft in Luftkanälen, wobei das System eine optoelektronische Vorrichtung nach einem der vorhergehenden Ansprüche, ein Netzwerkelement (4) und eine elektronische Vorrichtung (5) umfasst,
wobei das Netzwerkelement (4) konfiguriert ist, um das drahtlose Signal (S_r) zu empfangen, das Daten trägt, die für die Messung der Menge an Partikelmasse repräsentativ sind, die empfangenen Daten zu verarbeiten und ein mittellanges Entfernungssignal (S_ld) zu senden, das die verarbeiteten Daten der Messung der Menge an Partikelmasse trägt, die in dem Abschnitt der Luft innerhalb des Luftkanals vorhanden ist,
und wobei die elektronische Vorrichtung (5) konfiguriert ist, um das mittellange Entfernungssignal zu empfangen, das die verarbeiteten Daten der Messung der Menge an Partikelmasse trägt.

5. System nach Anspruch 4, ferner umfassend eine Kamera, die dazu konfiguriert ist, Bilder und/oder Videos zu erfassen, die mindestens einen Teil des Raums innerhalb des Luftkanals darstellen,
wobei der Transceiver ferner dazu konfiguriert ist, die erfassten Bilder und/oder Videos an das Netzwerkelement zu übermitteln.

6. System nach Anspruch 5, ferner umfassend einen Sensor, der konfiguriert ist, um das Niveau der mikrobiologischen Verunreinigung der Luft zu detektieren, die in dem Luftkanal vorhanden ist,
wobei der Transceiver ferner dazu konfiguriert ist, den gemessenen Wert des Grads der mikrobiologischen Verunreinigung der Luft an das Netzwerkelement zu übermitteln.

## Revendications

1. Dispositif optoélectronique pour détecter la qualité de l'air dans des conduites d'air, le dispositif comprenant :
• une diode laser (2-1) ;
• une résistance photosensible (2-2a) ;
• un circuit électronique (2-3) connecté électriquement à la résistance photosensible, le circuit électronique étant configuré pour recevoir le signal électrique (S_dt) et générer à partir de celui-ci un signal (S_rx_tx) transportant des données représentatives de la mesure de la quantité de particules ;
• un émetteur-récepteur de signal sans fil (2-4) connecté électriquement au circuit électronique (2-3), l'émetteur-récepteur étant configuré pour recevoir le signal (S_rx_tx) transportant des données représentatives de la mesure de la quantité de particules et pour générer à partir de celui-ci un signal sans fil (S_r) transportant des données représentatives de la mesure de la quantité de particules présentes dans la portion de l'air à l'intérieur de la conduite d'air ; le dispositif optoélectronique comprenant de plus un drain (2-11) adapté pour recevoir une portion de l'air à l'intérieur de la conduite d'air (10),
dans lequel la résistance photosensible (2-2a) est positionnée sur le fond du drain et comprend une surface photosensible sur laquelle la particule présente dans la portion de l'air se dépose au moyen de la force de gravité, la résistance photosensible étant configurée pour générer un signal électrique (S_dt) représentatif de la quantité de particules déposée sur la surface photosensible ;
dans lequel la diode laser est positionnée à proximité de la résistance photosensible et est configurée pour générer un faisceau optique (F_O) frappant au moins partiellement la surface photosensible de la résistance photosensible,
et dans lequel le circuit électronique comprend une unité de traitement configurée pour recevoir le signal électrique représentatif de la quantité de particules déposée sur la surface photosensible et calculer, en fonction du signal électrique généré, une mesure de la quantité de particules déposée par unité de surface sur la surface photosensible de la résistance photosensible.

2. Dispositif optoélectronique selon la revendication 1, dans lequel la surface de la résistance photosensible (2-2a) possède des dimensions connues.

3. Dispositif optoélectronique selon la revendication 1 ou 2, dans lequel le dispositif optoélectronique est réalisé avec une enveloppe (2-10) comprenant une ouverture adaptée pour recevoir la portion de l'air à l'intérieur de la conduite d'air (10), ladite ouverture définissant une première extrémité du drain qui se prolonge à l'intérieur de l'enveloppe,
et dans lequel la résistance photosensible (2-2a) est positionnée à l'intérieur de l'enveloppe à une deuxième extrémité du drain.

4. Système de contrôle de la qualité de l'air dans des conduites d'air, le système comprenant un dispositif optoélectronique selon l'une quelconque des revendications précédentes, un élément de réseau (4) et un dispositif électronique (5),
dans lequel l'élément de réseau (4) est configuré pour recevoir le signal sans fil (S_r) transportant des données représentatives de la mesure de la quantité de particules, traiter les données reçues et transmettre un signal à moyenne distance (S_ld) transportant les données traitées de la mesure de la quantité de particules présente dans la portion de l'air à l'intérieur de la conduite d'air,
et dans lequel le dispositif électronique (5) est configuré pour recevoir le signal à moyenne distance transportant les données traitées de la mesure de la quantité de particules.

5. Système selon la revendication 4, comprenant de plus une caméra configurée pour acquérir des images et/ou des vidéos représentatives d'au moins une partie de l'espace à l'intérieur de la conduite d'air,
dans lequel l'émetteur-récepteur est de plus configuré pour transmettre vers l'élément de réseau lesdites images et/ou vidéos acquises.

6. Système selon la revendication 5, comprenant de plus un capteur configuré pour détecter le niveau de pollution microbiologique de l'air présent à l'intérieur de la conduite d'air,
dans lequel l'émetteur-récepteur est de plus configuré pour transmettre vers l'élément de réseau la valeur mesurée du niveau de pollution microbiologique de l'air.
